# EUROPEAN PATENT APPLICATION

(11) **EP 2 647 504 A1**
(43) Date of publication of application: **09.10.2013**
(21) Application number: 13001713.0
(22) Date of filing: 04.04.2013
(51) Int. Cl.: B32B 38/10, B32B 37/20, B29L 31/44

(54) **Semiautomatic apparatus of detachment of film carrier and application of peelable layer for continuous or composite final coil for the coating of furniture surfaces**

(30) Priority: 06.04.2012 IT TV20120054
(71) Applicant: Biesse Tecnosystem SRL, 61122 Pesaro (PS) (IT)
(72) Inventor: Piasentin Mirko, 31014 Colle Umberto (TV) (US)
(74) Representative: Osti, Biancamaria

(57) **Abstract**

Semi-automatic apparatus (10) for coating of furniture surfaces, pre-disposed according to at least a first and a second configuration, the first configuration to detach films of various base materials or carrier, rewound, from the original peelable protective layer (22) applied to said carrier (24), as not suitable for further processing, for then reapply a peelable protective (102) suitable for subsequent processing, to compose coils of various base materials or film, continuous and rewound together with said peelable protective material; the second configuration to compose coils of composite materials, consisting of various base materials or film or rewound carrier, combined with a succession of single sheets of various materials having different colors and motifs, coupled in arbitrary sequence on said carrier, both by cold and by heat, together with the aforesaid peelable protective material suitable for further processing, in order to compose composite coils also scratch-proof and high-gloss, rewound together with said peelable protective material.

## Description

The present invention relates to a semi-automatic apparatus, for the unwinding, the composition and the rewinding in coil of a laminate film, opaque and ennobling, having minimum thickness, even when composite, i.e. of a film coupled of plastic, cellulose and other miscellaneous materials and composites, also transparent, scratch-resistant and high-gloss, so as to be subsequently used as a coating for surfaces of furniture, elements for furniture and furnishings.

### Field of application

The present invention relates to a semi-automatic apparatus designed to produce in a continuous way laminated coating for surfaces of furniture, detaching various materials or films of base or carrier rewound in coils, from the layer of the original peelable protective material applied to said carrier, inasmuch not suitable for further processing, for then reapply a peelable protective material suitable for further processing, in order to compose coils of various materials or films of base, continuous and rewound together with the said peelable protective material but; also to compose coils of composite materials, consisting of various materials or films of base or carrier rewound, combined with a succession of single sheets of various materials having different colors and patterns, coupled in arbitrary sequence on the said carrier, both cold and hot, also scratch-resistant and high-gloss, together with the aforesaid peelable protective material suitable for further processing, in order to compose coils of various materials or films of base composite with materials having different colors and different patterns and rewound together with the said peelable protective material for the coating of furniture surfaces.

Are known from the beginning of the last century the plastic laminate, the precursor of the coating film or coupled, used for the surfaces of kitchen cabinets and wood-like or marble-like tables, the coating or ennoblement of panels of composite wood materials that had and still have nowadays incredible popularity due to their very low cost but, mainly due to their rugged and highly durable surface with respect to the original noble materials such as wood and marble.

It's also known as a more common synonym for the plastic laminate, the term "Formica" that identifies the historical manufacturer namesake, the "Formica Corporation" founded in 1913 by Herbert A. and Daniel J. O'Connor, following their invention of the high-pressure laminate, which in its first form was used as an electrical insulator. Only in 1927 to it is added a layer of melamine resin to use it as a decorative laminate.

For laminate, in the furniture industry, is intended a sheet obtained by pressing several layers of paper impregnated with phenolic or melamine resins. In the most common version then the laminate is composed of a protective outer layer or finish called "overlay" usually impregnated with melamine resin, a sheet with a decorative printing or colored by solid colors also impregnated with melamine resins and a back composed of one or more layers of phenolic paper called "Kraft". The Kraft has a brownish color with turns based on requests from black to cream typical of the raw paper; they exists however laminated with Kraft uniform in tint with the surface and also Kraft made with layers of different colors; are furthermore produced laminated formed by a Kraft coupled to aluminum sheets, sliced or even to sheets of magnetic material such as for example in the production of magnetic boards. In the field of plastic laminate we can distinguish various types as described below.

HPL acronym for "High Pressure Laminate", is usually produced with flat presses in sheets thickness from five tenths up also to two cm. It is very durable and is also used for external facades cladding, bathrooms, kitchen countertops and workbenches and wherever it's necessary a really sturdy surface.

CPL acronym for "Continuous Pressure Laminate", as the name suggests, is produced in a continuous manner with some press by roller or calender. Typically the pressure exerted is lower and therefore the resistance results inferior. It is usually produced in coils with a sheet thickness by two tenths to six-tenths. It is used in furnishings to coat shoulders, doors, sides and plans not subject to extreme wear.

Known is also the film single or mixed coupled, also scratch-proof that, compared to plastic laminates described on, is fixed for example to a composite wood panel, using a polyurethane glue that, in the reticulation, ensures the seal both in humid environments that in presence of heat sources. The material most commonly used as an "overlay" is here instead the PET or Poly-Ethylene-Terephthalate. The polyethylene terephthalate or Poly-Ethylene-Terephthalate, is part of the polyester family, and is a thermoplastic resin composed of phthalates suitable for contact with food.

So what it can be reasonably said is that certainly it is known today the plastic laminate, precursor of the coating film or coupled, used for the surfaces of kitchen cabinets and tables, coating or ennoblement of panels of composite wood materials. Known is also the laminate composed of a protective layer or outer finish called "overlay", impregnated with melamine resin, a sheet with a decorative printing or colored by solid colors also impregnated with melamine resins and a back composed of one or more layers of phenolic paper called "Kraft". Are also known laminates formed from a Kraft coupled to aluminum sheets, sliced. Known are the systems of production of HPL and CPL to use for external facade cladding, bathrooms, kitchen tops, work benches, shoulders, doors, sides and tops of furniture. Known is more so the material most used as an "overlay" such as the PET or polyethylene terephthalate, which is part of the polyester family, and is a thermoplastic resin composed of phthalates suitable for contact with food. Finally, know is the film single or mixed coupled, also scratch-proof that, respect to plastic laminates, is fixed for example to a composite wood panel, using a polyurethane glue that, in the reticulation, ensures the seal both in humid environments that in the presence of sources of heat.

Currently there is the consistent recourse to solutions in the field, sometime original but, not exhaustive and economic, this because yet they not set themselves to resort to using a semi-automatic apparatus for the composition and the coil winding of a film, opaque and ennobling, even scratch-proof, having a minimum thickness, even when composite, such as a coupled film of plastic, cellulose and other various and composites materials, also transparent scratch-proof and high-gloss, to be later used as a surface coating of furniture.

### State of the art

As part of semiautomatic apparatus for the composition and the coil winding of a film, opaque and ennobling, also scratch-resistant and high-gloss, having a minimum thickness, even when composite, as to be subsequently used as a coating for surfaces of furniture, was conducted a search, which, although not exhaustive, has made it possible to identify at least the following prior documents:
D1 WO2006042416 (SUDANO)
D2 W09413176 (KIRIAZIS)
D3 CN1 01148514 (KANGRAN)
D4 KR20080079878 (KIM)
D5 W02005060609 (SOBONYA)
D6 KR20060130850 (JO)

D1 represents an electrochemical cell sub-assembly and a method for manufacturing same. The electrochemical cell sub-assembly includes a current collector sheet having a pair of opposite surfaces and a pair of opposite edges, each surface being coated with a respective layer of electrode material. A layer of polymer electrolyte envelopes both layers of electrode material and one of the pair of edges of the current collector sheet, thereby encapsulating the one edge of the current collector sheet while leaving exposed the other edge of the current collector sheet.

D2 Represents a composite that consists of a base material, a thermoplastic foil and a paper ply. The composite is made of a base material, a thermoplastic foil applied thereon which either contains a bonding agent, is composed of a bonding agent or is bonded by an adhesive to the base material and paper ply; and a paper ply upon which is applied a surface-improving coating bonded if required to the paper ply by means of an adhesive. Also disclosed is a process for producing this composite and its use in the furniture and panel industry.

D3 Represents an invention that relates to making process and application of one composite plastic sheet. The making process includes the following steps: painting adhesive of dipphenyl methane and diisocyanate to the base material sheet of EVA and the compounded material sheet of PVC, OPP, PP, PE or PET; stoving the painted base material sheet and compounded material sheet at 60-100 deg.c for 30-60 sec; aligning and adhering; pressurizing in a press at 175-245 g/sq cm for 6-8 sec. Thus made composite plastic sheet is applied in toy, billboard and paper file, and has high waterproofing performance, high elasticity and other advantages.

D4 Represents a manufacturing method of a high glossy panel for furniture and a panel and a manufacturing device by the same are provided to obtain an environment that is not harmful to worker's health. A high glossy panel includes a panel original plate(2), a pattern layer and a sheet(8). The panel original plate is made of wood having a thickness of 1-4cm. The pattern layer is adhered to the upper surface of the panel original plate with an adhesive, and has a pattern and a color like Han-paper, PVC film, a pattern wood thin plate. The sheet made of a high glossy sheet like acryl, PVC or PET is adhered to the upper surface of the pattern layer with an adhesive. The sheet is transparent and the thickness of the sheet is selected from a range of 0.1 mm - 3.0mm.

D5 Represents an adhesive covering for articles, particularly articles of furniture. The covering comprises a high-shrink, stretchable plastic or vinyl film having a textured finish embossed to one side of the plastic or vinyl film. A contact adhesive is provided on the bottom side of the embossed film, and a removable protective covering protects the contact adhesive. When the protective covering is removed and the adhesive covering is applied around an edge of the article with a small amount of stretching force, the covering adapts to a contour of the edge without leaving a gap between the contact adhesive and the article.

D6 Represents a method for manufacturing pattern sheet used in panel for furniture and interior design is provided to improve moisture, oil, abrasion, and heat resistance, to block hazardous materials included in ink used in pattern printing as much as possible, and to allow anti-bacterial property of the pattern sheets. The method for manufacturing pattern sheet used in panel for furniture and interior design comprises: lying a roll type pattern sheet on unwinder; preheating the pattern sheet supplied from the unwinder; applying sealant solution on the preheated pattern sheet; applying the adhesive solution on the sealant coating layer; applying UV curing agent on the adhesive coating layer of pattern sheet; curing the UV curing agent by exposing to UV; applying a releasing agent on the cured coating layer of pattern sheet; and rewinding the finished pattern sheet through a rewinder.

Ultimately, it is reasonable to assume known:
a) the plastic laminate, precursor of the coating film or coupled, used for the surfaces of furniture for kitchen and wood-like or marble-like tables, the coating or ennoblement of panels of wooden composite materials, consisting of a protective layer or of outer finishing said "overlay" usually impregnated with melamine resin, a sheet with a decorative printing or colored solid colors also impregnated with melamine resins and a back composed of one or more layers of phenolic paper called "Kraft";
b) the film single or mixed coupled, also scratch-proof that, compared to plastic laminates, is fixed for example to a composite wood panel, using a polyurethane glue that, in the reticulation, ensures the seal both in humid environments that in the presence of heat sources;
c) a composite made of a base material, a thermoplastic foil applied thereon which contains both a bonding agent, is composed of a bonding agent or is bonded by an adhesive to the base and play paper material; and a paper ply upon which is applied a surface that improves the coating bonded if required to the paper ply by means of an adhesive;
d) the process and application of one composite plastic sheet that includes the painting of adhesive of dipphenyl methane and diisocyanate to the base material sheet of EVA and the compounded material sheet of PVC, OPP, PP, PE or PET, stoving the painted base material sheet and compounded material sheet at 60-100 deg.C for 30-60 sec; aligning and adhering; pressurizing in a press at 175-245 g/sq. cm for 6-8 sec. Thus made composite plastic sheet is applied in toy, billboard and paper file, and has high waterproofing performance, high elasticity and other advantages;
e) an adhesive covering for articles, particularly articles of furniture. The covering comprises a high-shrink, stretchable plastic or vinyl film having a textured finish embossed to one side of the plastic or vinyl film. A contact adhesive is provided on the bottom side of the embossed film, and a removable protective covering protects the contact adhesive. When the protective covering is removed and the adhesive covering is applied around an edge of the article with a small amount of stretching force, the covering adapts to a contour of the edge without leaving a gap between the contact adhesive and the article;
f) a method for manufacturing pattern sheet used in panel for furniture and interior design is provided to improve moisture, oil, abrasion, and heat resistance, to block hazardous materials included in ink used in pattern printing as much as possible, and to allow anti-bacterial property of the pattern sheets. The method spreads a roll type pattern sheet on unwinder, preheating the pattern sheet supplied from the unwinder; applies a sealant solution on the preheated pattern sheet; applying the adhesive solution on the sealant coating layer; applying UV curing agent on the adhesive coating layer of pattern sheet; curing the UV curing agent by exposing to UV; applying a releasing agent on the cured coating layer of pattern sheet and rewinding the finished pattern sheet through a rewinder.

### Drawbacks

All that aforesaid and for as far known to the applicant, it is noted that the semiautomatic apparatuses for the composition and the coil winding of a film, covering and ennobling, also scratch-proof and high-gloss, having a minimum thickness, even when composite, to be subsequently used as a coating for surfaces of furniture, not concern a semi-automatic apparatus which is designed to detach various materials or films of base or carrier rewound, from the layer of the original peelable protective material applied to the said carrier, as not suitable for subsequent processing, for then reapply a peelable protective material suitable for further processing, in order to compose a coil of various materials or films of base, continuous and rewound together with the said peelable protective material for the coating of furniture surfaces.

As known, it is noted that the semiautomatic apparatuses for the composition and the coil winding of a film, covering and ennobling, having minimum thickness, when composite, to be subsequently used as a coating for surfaces of furniture, does not relate to a semi-automatic apparatus which is designed to compose a coil of composite materials, consisting of various materials or films of base or carrier rewound, combined with a succession of single sheets of materials having different colors and patterns, coupled in arbitrary sequence on the said carrier, by rolling coupling by means of a cold pressure, rewound together with the aforesaid peelable protective material suitable for further processing.

As known, it's also shown that the semi-automatic apparatuses for the composition and the coil winding of a film, covering and ennobling, having minimum thickness, when composite, to be subsequently used as a coating for surfaces of furniture, does not relate to a semi-automatic apparatus which is designed to compose a coil of composite materials, consisting of various materials or films of base or carrier scratch-proof and high-gloss rewound, combined with a succession of single sheets of materials having different colors and patterns, coupled in arbitrary sequence on the said carrier, by rolling coupling by means of hot pressing, together with the aforesaid peelable protective material suitable for subsequent processing, rewound together with the aforesaid peelable protective material suitable for further processing. While making consistent use of similar solutions in the field, they are not to be considered exhaustive and economic, and that's because, in principle, they did not have the goal of using a semi-automatic apparatus, designed both to remove various materials or films of base or rewound carrier, from the layer of original peelable protective material applied to the said carrier, and to compose a coil of composite materials, consisting of various materials or films of base or rewound carrier, combined with a succession of single sheets of various materials having colors and different motifs, coupled in arbitrary sequence on the said carrier, both cold and hot and, with high-gloss finish, together with the aforesaid peelable protective material suitable for subsequent processing for the coating of furniture surfaces.

For what regards then a combined specifically studied of a semi-automatic apparatus designed to detach various materials or films of base or rewound carrier, by the layer of original peelable protective material applied to the said carrier, as not suitable for further processing, and then reapply a peelable protective material suitable for further processing, in order to compose both coils of various materials or films of base, continuous and rewound together with the said peelable protective material, and to compose coils of composite materials, consisting of various materials or films of base or rewound carrier, combined with a succession of single sheets of materials having different colors and motifs, coupled in arbitrary sequence on the said carrier, both cold and hot, and, with high-gloss finish, together with the aforesaid peelable protective material suitable for further processing, to compose coils of various materials or films of base composite and rewound together with the said peelable protective material, are not seen similar realizations or which suggest the use in the field of patent and in general, in the state of the art. In principle it can therefore be agreed that what tracked as state of the art relates to the use of apparatuses for the lamination of traditional laminates constituted of various coupled materials of films, covering and ennobling, i.e. coupled films of plastic, cellulose and other various materials and composites, also transparent but not scratch-proof or high-gloss, to be later used as a surface coating of furniture.

From all the above exposed, there is a need for companies, particularly of the sector, to identify alternative solutions, which are more effective, compared to the solutions up to now in place. A purpose of the present invention is also to obviate and solve the described drawbacks.

### Brief description of the invention

This and other purposes are achieved with the present invention according to the characteristics of the included claims solving the mentioned problems through the implementation of a semi-automatic apparatus for coating surfaces of furniture, pre-disposed according to at least a first and a second configuration:
- said first configuration to detach various materials or films of base or carrier, rewound, from the original peelable protective layer applied to the said carrier, as not suitable for further processing, and then reapply a protective peelable suitable for subsequent processing, to compose coils of various materials or films of base, continuous and rewound together with the said peelable protective material for the coating of furniture surfaces;
- said second configuration to compose coils of composite materials, consisting of various materials or films of base or rewound carrier, combined with a succession of single sheets of various materials having different colors and motifs, coupled in arbitrary sequence on the said carrier, both by cold than by heat, together with the aforesaid peelable protective material suitable for further processing, in order to compose composite coils also scratch-proof and high-gloss, rewound together with the said peelable protective material for the coating of furniture surfaces.

### Aims and advantages

In this way, through the considerable creative contribution whose effect has allowed to achieve a considerable technical progress, are achieved some aims and advantages.

The first aim of the object of the present invention was to enable the construction of a semi-automatic apparatus of coating for surfaces of furniture, designed to be configured to both detach various materials or films of base or carrier, rewound, from the original peelable protective layer applied to the said carrier, as not suitable for further processing, for then reapply a peelable protective suitable for subsequent processing, to compose coils of various materials or films of base, continuous and rewound together with the said peelable protective material; both for composing coils of composite materials, consisting of various materials or films of base or rewound carrier, combined with a succession of single sheets of various materials having different colors and motifs, coupled in arbitrary sequence on the said carrier, both by cold and by heat, together with the aforesaid peelable protective material suitable for further processing, in order to compose coils composite also scratch-proof and high-gloss, rewound together with the said peelable protective material for the coating of furniture surfaces.

A second aim was therefore the realization of a semi-automatic apparatus for coating surfaces of furniture, to detach various materials or films of base or rewound carrier, by the layer of the original peelable protective material applied to the said carrier, as not suitable to subsequent treatments, for then reapply a peelable protective material suitable for further processing, in order to compose a coil of various materials or films of base, continuous and rewound together with the said peelable protective material for the coating of furniture surfaces.

A third aim has been to achieve a semi-automatic apparatus for coating surfaces of furniture, to compose a coil of composite materials, consisting of various materials or films of base or rewound carrier, combined with a succession of single sheets of materials having various colors and different motifs, coupled in arbitrary sequence on the said carrier, by rolling coupling by means of cold pressure, rewound together with the aforesaid peelable protective material suitable for subsequent processing for the coating of furniture surfaces.

A fourth aim consists in the realization of a semi-automatic apparatus for coating surfaces of furniture, to compose a coil of composite materials, consisting of various materials or films of base or of carrier scratch-proof and high-gloss rewound, combined with a succession of single sheets of various materials having different colors and motifs, coupled in arbitrary sequence on the said carrier, by rolling coupling by means of hot pressing, rewound together with the aforesaid peelable protective material suitable for subsequent processing for the coating of furniture surfaces.

These and other advantages will appear from the following detailed description of preferred embodiments with the aid of the enclosed schematic drawings, whose details of execution are not to be considered limitative but only illustrative.

### Drawings contents

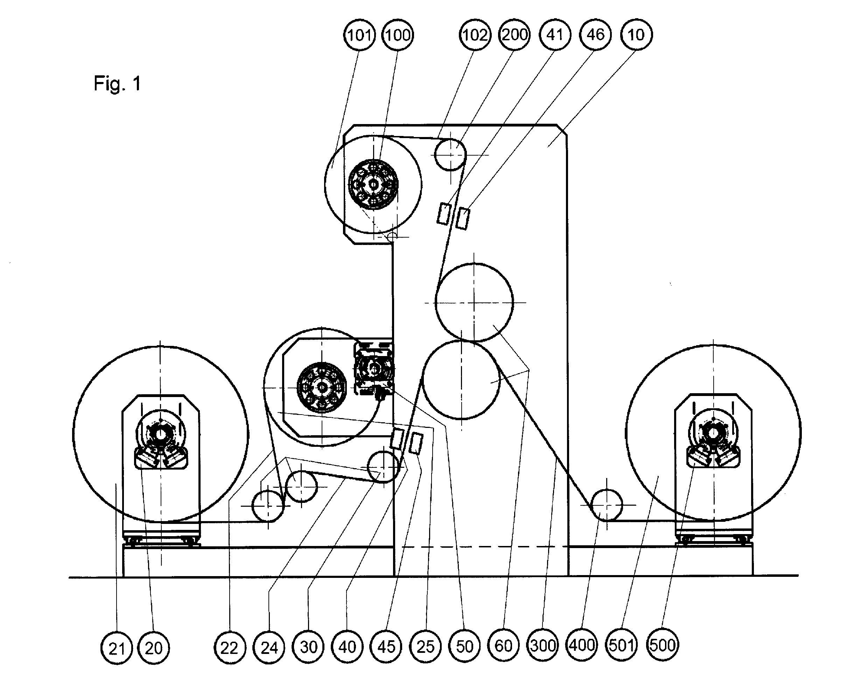

Fig. 1 depicts an assembly example of the configuration of the apparatus of the present invention to detach films of various basic materials or carrier, rewound, from the original peelable protective layer applied to the said carrier, as not suitable for further processing, for then reapply a suitable peelable protective in subsequent processes, to compose coils of various materials or films of base, continuous and rewound together with the said peelable protective material for the coating of furniture surfaces;

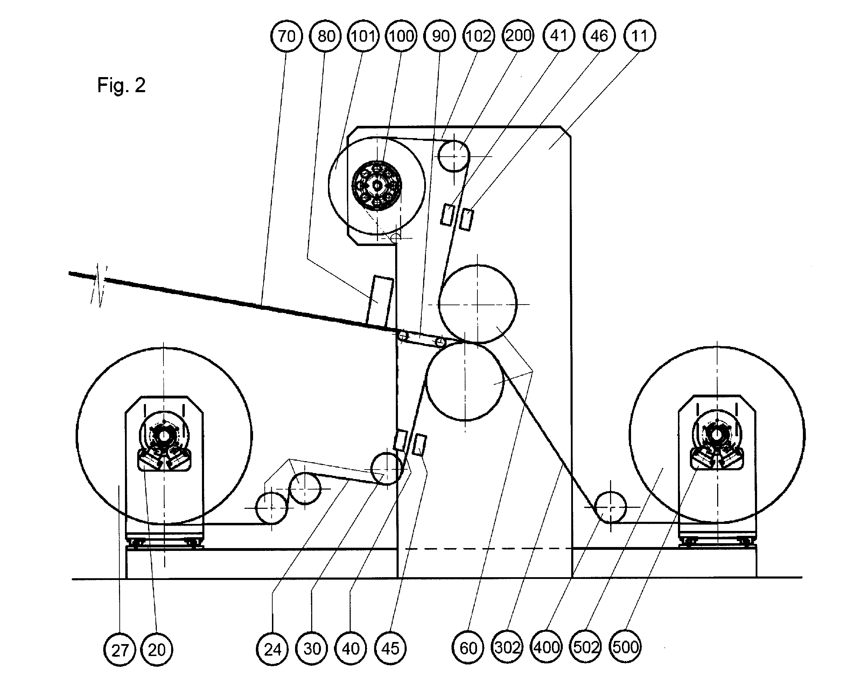

Fig. 2 depicts an assembly example of the configuration of the apparatus of the present invention to compose a coil of composite materials, consisting of various materials or films of base or carrier rewound, combined with a succession of single sheets of various materials having different colors and motifs, coupled in arbitrary sequence on the said carrier, by rolling coupling by means of a cold pressure, rewound together with the aforesaid peelable protective material suitable for subsequent processing for the coating of furniture surfaces;

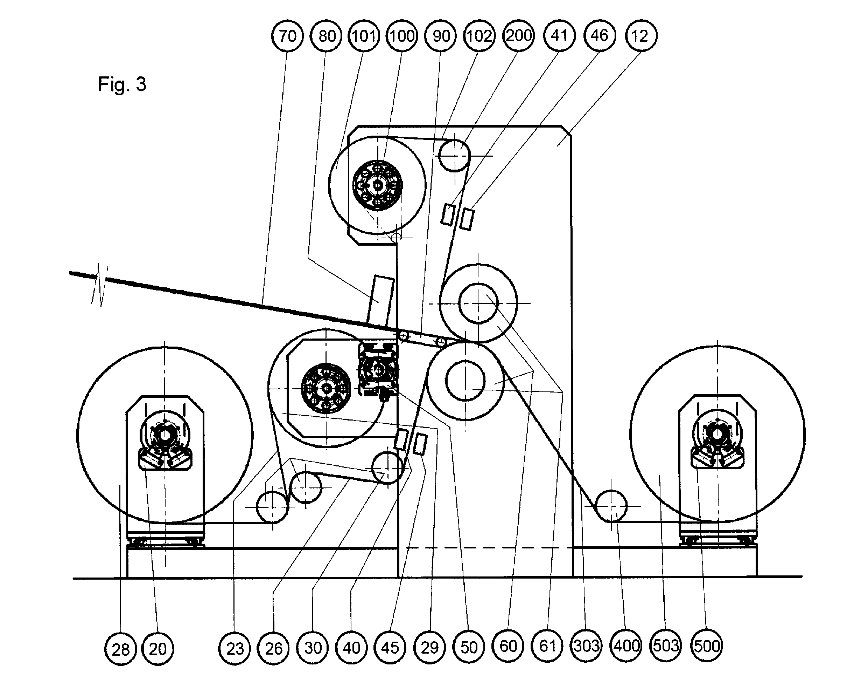

Fig. 3 depicts an assembly example of the configuration of the apparatus of the present invention to compose a coil of composite materials, consisting of various materials or films of base or carrier scratch-proof and high-gloss rewound, combined with a succession of single sheets of materials having various colors and different motifs, coupled in arbitrary sequence on the said carrier, by rolling coupling by means of hot pressing, rewound together with the aforesaid peelable protective material suitable for subsequent processing for the coating of furniture surfaces.

### Pratical example of realization of the invention

The object of the present invention (see Fig.1) is a semi-automatic facility (10) of lamination and coupling of coating or laminate for surfaces of furniture, assembled in a first configuration (Fig. 1), to detach film or carrier of various basic materials, from a coil of film or transparent carrier, pvc or various materials, coupled to peelable protective (21), supported and moved by a front carriage carrier of a film carrier coil motorized laterally with pneumatic brake (20 ), via a group of three rollers for detachment of film or carrier (30) provided of control of the heeling of the film or carrier (40) and of antistatic cleaning unit of film or carrier (45), which detach the peelable protective from the film or carrier (22) and they rewind it in a coil of peelable protective detached (25) by a group of carrier detachment by motorized torque control (50), as not suitable for further processing. The film or carrier (24) without peelable protective passes, then, together with a new peelable protective (102), which is supplied from a coil of new peelable protective (101) moved by a group of coil support with pneumatic braking (100), through a widening cylinder of the new peelable protective (200) and driven by a control of heel edge of the new peelable (41) and cleaned by an antistatic cleaning unit of the new peelable (46), through two cylinders of coupling and rolling (60) in output, which film or carrier coupled to the new peelable protective (300), through a widening cylinder (400), to form a coil of film or carrier coupled to the new peelable protective rewound (501), by a winding group of the recomposed coil (500).

According to the embodiment of the present invention (see Fig.2) is a semi-automatic apparatus (11) of lamination and coupling of coating or laminate for surfaces of furniture, assembled in a second configuration (Fig. 2) that, by a coil of film or transparent carrier, pvc or various materials (27) supported and moved by a front carriage carrier of a film carrier coil motorized laterally with pneumatic brake (20 ), via a group of three rollers for detachment of film or carrier (30) provided of control of the heeling of the film or carrier (40) and of antistatic cleaning unit of film or carrier (45), passes this film or carrier (24) through two cylinders of coupling and lamination (60) by cold which simultaneously receive from a supporting surface sheets (70) a succession of individual sheets of various materials having different colors and motifs, arranged in arbitrary sequence from a group of sheets singularization (80), guided by a vacuum table of sheet accompanying (90), the which are joined by said coupling and rolling cylinders (60) together with a new peelable protective (102), which is supplied from a coil of new peelable protective (101) moved by a group of coil support with pneumatic braking (100), through a widening cylinder of the new peelable protective (200) and driven by a control of the heel edge of the new peelable (41) and cleaned by an antistatic cleaning unit of the new peelable (46), to exit which film or carrier cold coupled to the sheets and the new peelable protective (302) through a widening cylinder (400), to form a rewound coil of film or cold coupled carrier to the various sheets and to the new peelable protective (502), by a winding group of the recomposed coil (500).

Still, an embodiment of the present invention (see Fig.3) is a semi-automatic apparatus (12) of lamination and coupling of coating or laminate for surfaces of furniture, assembled in a third configuration (Fig.3) that, from a coil of film or carrier scratch-proof high-gloss coupled to a double protective peelable (28), supported and moved by a front carriage carrier of a film carrier coil motorized laterally with pneumatic brake (20 ), via a group of three rollers for detachment of film or carrier (30) provided of control of the heeling of the film or carrier (40) and of antistatic cleaning unit of film or carrier (45), which detach the back of the peelable protective of the film or high-gloss carrier (23) and they rewind it into a coil of rear peelable protective detached (29) by a group of carrier detachment by motorized torque control (50), as not suitable for further processing. The film carrier or scratch-proof high-gloss with peelable visible side (26) passes, then, with the side facing upwards, without peelable protective back of the film or carrier high-gloss (23) through two cylinders of coupling and lamination (60) heated by a thermostatted heating system (61) which activates the adhesive side without peelable protective of the film or high-gloss carrier, while such coupling and laminating cylinders (60) simultaneously receive from a sheets plane support (70) a succession of individual sheets of various materials having different colors and motifs, arranged in arbitrary sequence from a group of sheets singularization (80), guided by a vacuum table of sheets accompanying (90), which are joined by said coupling and laminating cylinders (60) heated by a thermostatted heating system (61), together with a new peelable protective (102), which is supplied from a coil of new peelable protective (101) moved by a group of coil support with pneumatic braking (100), through a widening cylinder of new peelable protective (200) and driven by a control of heel edge of the new peelable (41) and cleaned by an antistatic cleaning unit of the new peelable (46), to exit which film or high-gloss carrier heat bonded to the sheets and to the new peelable protective (303) through a widening cylinder (400), to form a rewound coil of film or carrier scratch-proof and high-gloss heat bonded to the sheets and to the new peelable protective (503), by a winding group of the recomposed coil (500).

The shapes shown in the drawings are purely illustrative but not exhaustive.

### Legend

10) semi-automatic apparatus of carrier detachment from the original peelable and application of new peelable layer, for continuous coil (Fig. 1)
11) semi-automatic apparatus of carrier detachment, cold coupled to the various sheets and at the peelable protective, for composite coil (Fig. 2)
12) semi-automatic apparatus of carrier detachment of the high-gloss scratch-proof, heat bonded to the various sheets and peelable protective, for composite coil (Fig. 3)
20) front carriage carrier of film or carrier coil motorized laterally with pneumatic brake
21) film coil or transparent carrier, pvc or various materials, coupled with peelable protective
22) peelable protective detached from the film or carrier
23) back peelable protective of the film or high-gloss carrier
24) film or carrier
25) coil of peelable protective detached
26) film or carrier scratch-proof high-gloss with peelable visible side
27) film coil or transparent carrier, pvc or various materials
28) coil of film or carrier scratch-proof high-gloss coupled to double peelable protective
29) coil of back peelable protective detached
30) group of three rollers for detaching film or carrier
40) control of heel edge of the film or carrier
41) control of heel edge of the new peelable
45) antistatic cleaning unit of the film or carrier
46) antistatic cleaning unit of the new peelable
50) group of carrier detachment by motor torque control
60) cylinders of coupling and lamination
61) thermostatted heating system
70) sheets support surface
80) group of sheets singularization
90) vacuum table of sheets accompanying
100) group of coil support with pneumatic braking
101) coil of new peelable protective
102) new peelable protective
200) widening cylinder of the new peelable protective
300) film or carrier coupled to the new peelable protective (Fig. 1)
302) film or carrier cold coupled to the sheets and the new peelable protective (Fig. 2)
303) film or high-gloss carrier heat bonded to the sheets and to the new peelable protective (Fig. 3)
400) widening cylinder
500) winding group of the reassembled coil
501) rewound coil of film or carrier coupled to the new peelable protective (Fig. 1)
502) rewound coil of film or carrier cold coupled to the various sheets and to the new peelable protective (Fig. 2)
503) rewound coil of film or carrier scratch-proof and high-gloss heat bonded to the sheets and to the new peelable protective (Fig. 3)

## Claims

1. A semi-automatic laminating apparatus (10, 11, 12) for the coating of surfaces of furniture and elements for furniture and furnishing, **characterized in that** is apt for detaching film or carrier of various base materials, from a coil of film or transparent carrier, pvc or various materials, coupled to peelable protective (21), supported and moved by a front carriage carrier of a film carrier coil motorized laterally with pneumatic brake (20 ), via a group of three rollers for detachment of film or carrier (30) provided of control of the heeling of the film or carrier (40) and of antistatic cleaning unit of film or carrier (45), which detach the peelable protective from the film or carrier (22) and they rewind it in a coil of peelable protective detached (25) by a group of carrier detachment by motorized torque control (50), as not suitable for further processing, whereas the film or carrier (24) without peelable protective passes, then, together with a new peelable protective (102), which is supplied from a coil of new peelable protective (101) moved by a group of coil support with pneumatic braking (100), through a widening cylinder of the new peelable protective (200) and driven by a control of heel edge of the new peelable (41) and cleaned by an antistatic cleaning unit of the new peelable (46), through two cylinders of coupling and rolling (60) in output, which film or carrier coupled to the new peelable protective (300), through a widening cylinder (400), to form a coil of film or carrier coupled to the new peelable protective rewound (501), by a winding group of the recomposed coil (500), and is arranged in at least a first and a second configuration; said first configuration to detach films of various base materials or carrier (21, 27, 28) rewound, from the original peelable protective layer (22, 23) applied to said film or carrier, as not suitable for further processing, and then reapply a new protective peelable (102) suitable for further processing, to form coils of materials, various films or carrier of base, continuous and rewound (501), together with the said peelable protective material (102); and, in a second configuration to compose a rewound coil of film or carrier (502, 503) of laminated composites materials, constituted of materials, various films or carrier of base rewound, combined with a succession of single sheets of various materials having different colors and motifs, cold and hot coupled in arbitrary sequence on the said film or carrier, together with the said peelable protective material suitable for subsequent processing (102), in order to compose diverse rewound coils of film or carrier scratch-resistant and high-gloss cold and heat coupled to the sheets and the new protective peelable (502, 503) for the coating of furniture surfaces.

2. Semi-automatic apparatus for carrier detachment from the original peelable and application of a new peelable layer for a continuous coil (10) for coating surfaces of furniture, to remove materials, various films or carrier of base rewound (21), by the layer of protective material detached from the peelable film or carrier (22), as not suitable for further processing, and then reapply a new peelable protective material (102), suitable for further processing, according to claim 1, **characterized in that** said semi-automatic apparatus for carrier detachment from the original peelable layer and, application of new peelable, for a continuous coil (10) composes a rewound coil of film or carrier coupled to the new peelable protective (501), so as to be suitable for further processing for the coating of furniture surfaces.

3. Semi-automatic apparatus for film or carrier detachment, cold bonded to the various sheets and the peelable protective, for composite coil (11), for coating surfaces of furniture, according to claims 1 and 2, **characterized in that** it composes a rewound coil of film or carrier cold bonded to the various sheets and the new peelable protective (502), rewound, and constituted by a succession of single sheets of various materials having different colors and motifs, coupled in arbitrary sequence on the said film or carrier, through coupling and lamination cylinders (60) by means of rolling with cold pressing, rewound together with the aforesaid new peelable protective material (102), suitable for subsequent processing for the coating of furniture surfaces.

4. Semi-automatic apparatus for scratch-proof high-gloss film or carrier detachment, hot bonded to the various sheets and the peelable protective, for composite coil (12), for coating surfaces of furniture, according to previous claims, **characterized in that** composes a rewound coil of scratch-proof and high-gloss film or carrier hot bonded to the sheets and to the new peelable protective (503), through coupling and lamination cylinders (60) by means of rolling with hot pressing, by the aid of a thermostatted heating system (61) embedded in said coupling and lamination cylinders (60), constituted of materials, various films or carrier of base scratch resistant and high-gloss, rewound, composed of a succession of single sheets of various materials, having different colors and motifs, coupled in arbitrary sequence on said film or carrier, through lamination or rolling cylinders coupling, with coupling and lamination cylinders (60) by means of hot pressing, allowed by a thermostatted heating system (61) of the said coupling and lamination cylinders (60), and rewound together with the aforesaid new peelable protective material (102), suitable for subsequent processing for the coating of furniture surfaces.

5. Method of lamination (10, 11, 12) for the coating of surfaces of furniture and elements for furniture and furnishing, **characterized in that** is apt for detaching film or carrier of various base materials, from a coil of film or transparent carrier, pvc or various materials, coupled to peelable protective (21), supported and moved by a front carriage carrier of a film carrier coil motorized laterally with pneumatic brake (20 ), via a group of three rollers for detachment of film or carrier (30) provided of control of the heeling of the film or carrier (40) and of antistatic cleaning unit of film or carrier (45), which detach the peelable protective from the film or carrier (22) and they rewind it in a coil of peelable protective detached (25) by a group of carrier detachment by motorized torque control (50), as not suitable for further processing, whereas the film or carrier (24) without peelable protective passes, then, together with a new peelable protective (102), which is supplied from a coil of new peelable protective (101) moved by a group of coil support with pneumatic braking (100), through a widening cylinder of the new peelable protective (200) and driven by a control of heel edge of the new peelable (41) and cleaned by an antistatic cleaning unit of the new peelable (46), through two cylinders of coupling and rolling (60) in output, which film or carrier coupled to the new peelable protective (300), through a widening cylinder (400), to form a coil of film or carrier coupled to the new peelable protective rewound (501), by a winding group of the recomposed coil (500), and is arranged in at least a first and a second configuration; said first configuration to detach films of various base materials or carrier (21, 27, 28) rewound, from the original peelable protective layer (22, 23) applied to said film or carrier, as not suitable for further processing, and then reapply a new protective peelable (102) suitable for further processing, to form coils of materials, various films or carrier of base, continuous and rewound (501), together with the said peelable protective material (102); and, in a second configuration to compose a rewound coil of film or carrier (502, 503) of laminated composites materials, constituted of materials, various films or carrier of base rewound, combined with a succession of single sheets of various materials having different colors and motifs, cold and hot coupled in arbitrary sequence on the said film or carrier, together with the said peelable protective material suitable for subsequent processing (102), in order to compose diverse rewound coils of film or carrier scratch-resistant and high-gloss cold and heat coupled to the sheets and the new protective peelable (502, 503) for the coating of furniture surfaces.
